# EUROPEAN PATENT APPLICATION

(11) **EP 1 340 471 A1**
(43) Date of publication of application: **03.09.2003**
(21) Application number: 03425116.5
(22) Date of filing: 24.02.2003
(51) Int. Cl.: A61C 1/00

(54) **A dental unit**

(30) Priority: 28.02.2002 IT BO20020101
(71) Applicant: CASTELLINI S.p.A., 40013 Castel Maggiore (Bologna) (IT)
(72) Inventor: Castellini, Franco, 40124 Bologna (IT)
(74) Representative: Lanzoni, Luciano

(57) **Abstract**

A dental unit comprises at least a main water circuit (1) for supplying a fluid to main and accessory medical instruments (2) on the dental unit (100) and sub-circuits, namely, a first sub-circuit (3) and a second sub-circuit (4), for dividing the fluid supply between the main or accessory medical instruments (2a, 2b) mounted on a first tray (5) and those mounted on a second tray (6). The two sub-circuits (3, 4) have means (7, 8) constituting a first continuous drain (7) and a second continuous drain (8), respectively, designed to enable the fluid in the first and second sub-circuits (3, 4) to be continuously renewed.

## Description

The present invention relates to a dental unit.

It is known that dental units have water and air systems where the water line supplies fluids used by dental equipment and patients (water or physiological saline for tumblers and handpieces), or consumer units (swilling water for the spittoon), while the air line is used for certain items of equipment (air spray handpieces, cooling air and driving air).

With increases in general standards of hygiene and with dental apparatus and equipment becoming more and more "fragile", several design solutions have been found for the water systems of dental units, not only to guarantee their efficient operation and durability but also to maintain the sterility of the conduits both during and after successive patient treatments.

At the present time, the basic structure of the fluid circuit comprises a first main line supplying water from the mains, and a second main line supplying air from an external source (compressor), each of these lines having a plurality of branches leading to the operating and accessory equipment, that is to say, the handpieces, the tumbler water supply endpiece and the spittoon.

Dental units of the latest generation have a number of auxiliary handpieces and tools, which are normally used by the dentist's assistant and are mounted on an ancillary tray, in addition to the handpieces and tools used by the dentist and mounted on the main tray. For convenience, the ancillary tray may be referred to as the "dental assistant's tray" and the main tray as the "dentist's tray". This has involved the addition of independent conduits to supply fluids to the auxiliary handpieces and tools, thus modifying the structure of the water circuit and creating the need to apply disinfection / sterilisation cycles also to the conduits of the auxiliary handpieces and tools in order to keep the water circuit of the dental unit in its entirety at a high level of sterility.

The aim of the present invention is therefore to provide a dental unit made in such a way as to maintain a high level of hygiene in all the branches of the water circuit, which means allowing sterilisation / disinfection to be carried out in the water circuit in its entirety, including the branch with the equipment on the assistant's tray, without significantly changing the structure of the circuit or excessively extending the time required to perform a routine cleaning / disinfection /sterilisation cycle.

This aim is achieved in a dental unit comprising at least a main water circuit for supplying a fluid to main and accessory medical instruments on the dental unit and first and second sub-circuits for dividing the fluid supply between the main or accessory medical instruments mounted on a first tray and those mounted on a second tray; each of the two sub-circuits having means constituting first and second continuous drains designed to enable the fluid in the first and second sub-circuits to be continuously renewed.

The technical characteristics of the invention, with reference to the above aims, are clearly described in the claims below and its advantages are apparent from the detailed description which follows, with reference to the accompanying drawing which illustrates a preferred embodiment of the invention provided merely by way of example without restricting the scope of the inventive concept, and in which:

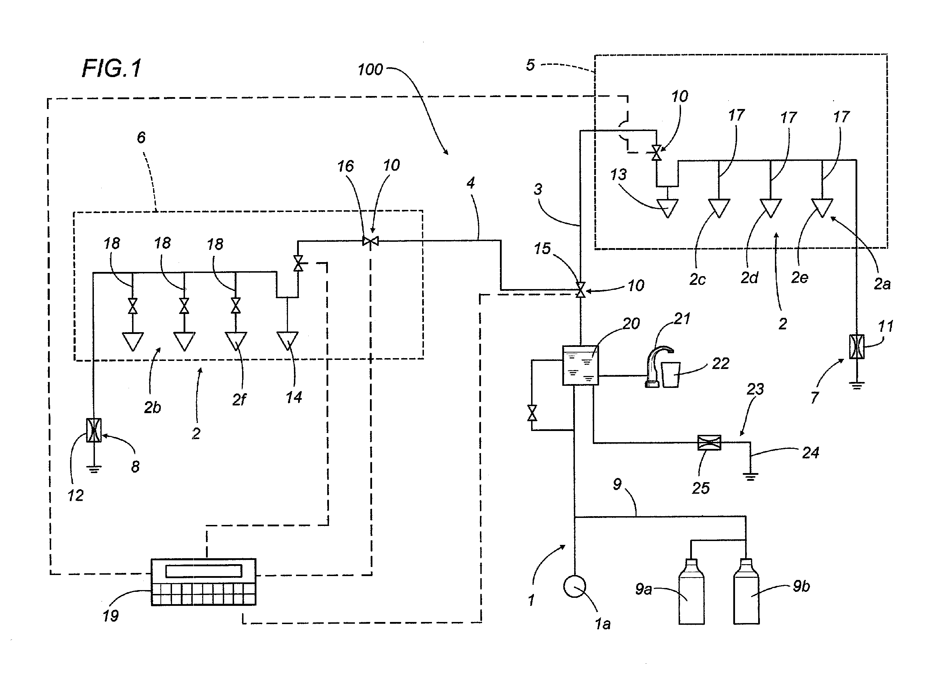

- Figure 1 shows a diagram representing the water circuit of the dental unit according to the present invention.

With reference to the accompanying drawing, the dental unit, labelled 100, comprises, at least insofar as is relevant to the present invention, a main water circuit 1 for supplying a user fluid (usually water from a main source la) to main and accessory medical instruments 2 on the dental unit 100, and first and second sub-circuits 3 and 4, for dividing the fluid supply between the main or accessory medical instruments 2a, 2b mounted on a first tray 5 and those mounted on a second tray 6 (represented by the dashed lines in Figure 1).

The medical instruments 2a and 2b may consist of customary handpieces, including, on the dentist's tray 5, a syringe 13, a turbine 2c, a micromotor 2d and an ablator 2e, and, on the tray 6, referred to as the dental assistant's tray, another syringe 14, an ablator 2f, as well as other main or auxiliary handpieces, depending on the treatment to be carried out.

The numeral 9 denotes a first independent branch connected to the water circuit 1 and supplying the water circuit 1 itself with a disinfectant /sterilising solution or, instead of the user fluid, with an alternative fluid (for example a sterile fluid) drawn from containers 9a and 9b.

As illustrated in the accompanying drawing, each of the two sub-circuits 3 and 4 has means constituting a first continuous drain 7 and a second continuous drain 8 designed to enable the fluid in the first and second sub-circuits 3 and 4 to be continuously renewed.

More specifically, the first and second continuous drain means 7 and 8 are located downstream of the first and second sub-circuits 3 and 4, respectively.

Structurally, the first and second continuous drain means 7 and 8 each consist of a drain conduit formed by an extension of the corresponding sub-circuit 3 or 4 and are equipped with respective valve means 11 and 12 for checking the passage of the fluid.

Thanks to the presence of the double continuous drain 7 and 8, programmed cleaning cycles can be carried out on one or both of the sub-circuits 3 and 4.

These cycles are controlled by means 10 for selecting the supply of the disinfectant /sterilising liquid, acting on the first and second sub-circuits 3 and 4, and activated manually or automatically in such a way as to let the disinfectant / sterilising liquid flow into the first and second sub-circuits 3, 4 upon the occurrence of defined events on the dental unit 100 and in accordance with automatic or manual sequences and/or combinations so that sterilising /disinfecting cycles are carried out in the first sub-circuit 3 and/or in the second sub-circuit 4.

In this context, a defined event may be the start or the end of treatment of a patient, the idle time between treatment of one patient and the next or other such events.

Events of this type can be programmed optimally if the dental unit 100 is equipped with a microprocessor unit 19 to control its main and auxiliary functions.

The above mentioned selection means 10 may be connected to the microprocessor unit 19 so that they can be programmed to enable inflow of the disinfectant / sterilising liquid when one of the defined events occurs on the dental unit 100.

The selection means 10 may consist of shutoff means 15 and 16 (customary valves) mounted on the first and second sub-circuits 3 and 4 upstream of the respective branches 17 and 18 supplying each of the handpieces 2.

As shown in Figure 1, the water circuit 1 may include an independent container 20 to hold the above mentioned user fluid or the alternative (sterile) fluid that feeds an endpiece 21 supplying a tumbler 22.

The container 20 may be equipped with third continuous drain means 23 designed to enable the fluid in the separate container 20 to be continuously renewed.

The third continuous drain means 23 also consist of a drain conduit 24 connected to the container 20 and having valve means 25 for checking the passage of the fluid.

A water circuit 1 made in this way may thus implement a sterilising / disinfecting method comprising the steps of: introducing a disinfectant / sterilising liquid in the water supply circuit 1; keeping this fluid in the circuit 1 for a predetermined length of time; and flushing the disinfectant / sterilising liquid out of the supply circuit 1 at least through the aforementioned sub-circuit 3.

In addition, the method may further comprise at least the following steps: introducing a disinfectant / sterilising liquid in the second sub-circuit 4 for a predetermined length of time; and flushing the disinfectant / sterilising liquid out of the sub-circuit 4.

Thanks to the second continuous drain 8 and to the selection means 10, the step of introducing the disinfectant / sterilising liquid in the second sub-circuit 4 may be carried out at the same time as the step of introducing it in the first sub-circuit 3, depending on the dentist's requirements. To do this, the step of introducing the disinfectant / sterilising liquid must be preceded by a step of activating the selection means 10 on the two sub-circuits 3 and 4 so as to enable the fluid to be introduced in the sub-circuits 3 and 4 in predetermined succession.

Similarly, the step of flushing the disinfectant /sterilising liquid is carried out at the same time as a step of opening the selection means 10 acting on the two sub-circuits so as to let the user fluid flow into the circuit.

A dental unit made in this way thus achieves the preset aim through a simple and effective structuring of the water circuit, which, thanks to the two continuous drains, can be maintained at a high level of hygiene at all times.

Moreover, the presence of the double continuous drain allows complete sterilisation cycles to be carried out either simultaneously or at different times in the two sub-circuits, depending on the type of treatment that the last patient has undergone or that the next patient will undergo.

The addition of a third continuous drain on the line that supplies the tumbler means that the circuit has a high rate of controlled fluid renewal, thus reducing even further the presence of contaminating agents in the water circuit.

The invention described can be subject to modifications and variations without thereby departing from the scope of the inventive concept. Moreover, all the details of the invention may be substituted by technically equivalent elements.

## Claims

1. A dental unit comprising at least:
- a main water circuit (1) for supplying a fluid to main and accessory medical instruments (2) on the dental unit (100);
- a first sub-circuit (3) and a second sub-circuit (4) for dividing the fluid supply between the main or accessory medical instruments (2a, 2b) mounted on a first tray (5) and those mounted on a second tray (6), the dental unit being **characterised in that** the two sub-circuits (3, 4) have means (7, 8) constituting a first continuous drain (7) and a second continuous drain (8), respectively, designed to enable the fluid in the first and second sub-circuits (3, 4) to be continuously renewed.

2. The dental unit according to claim 1, where the water circuit (1) comprises at least one first independent branch (9) connected to the water circuit (1) and supplying the water circuit (1) with at least one disinfectant / sterilising liquid, **characterised in that** it comprises selection means (10) acting on the first and second sub-circuits (3, 4) and activated manually or automatically in such a way as to let the alternative user fluid or the disinfectant /sterilising liquid flow into the first and second sub-circuits (3, 4) upon the occurrence of defined events on the dental unit (100) and in accordance with automatic or manual sequences and/or combinations so that sterilising / disinfecting cycles are carried out in the first sub-circuit (3) and/or in the second sub-circuit (4).

3. A dental unit comprising at least:
- a main water circuit (1) for supplying a fluid to main and accessory medical instruments (2) on the dental unit (100);
- a first sub-circuit (3) and a second sub-circuit (4) for dividing the fluid supply between the main or accessory medical instruments (2a, 2b) mounted on a first tray (5) and those mounted on a second tray (6) ;
- at least one first independent branch (9) connected to the water circuit (1) and supplying the water circuit (1) with at least one disinfectant / sterilising liquid, the dental unit being **characterised in that** it further comprises:
- means (7, 8) constituting a first continuous drain (7) and a second continuous drain (8) for the first and second sub-circuits (3, 4), respectively, designed to enable the fluid in the first and second sub-circuits (3, 4) to be continuously renewed;
- selection means (10) acting on the first and second sub-circuits (3, 4) and activated manually or automatically in such a way as to let the alternative user fluid or the disinfectant /sterilising liquid flow into the first and second sub-circuits (3, 4) upon the occurrence of defined events on the dental unit (100) and in accordance with automatic or manual sequences and/or combinations so that sterilising / disinfecting cycles are carried out in the first sub-circuit (3) and/or in the second sub-circuit (4).

4. The dental unit according to claim 1 or 3, **characterised in that** the first continuous drain means (7) and the second continuous drain means (8) are located downstream of the first and second sub-circuits (3, 4), respectively.

5. The dental unit according to claim 1 or 3, **characterised in that** the first continuous drain means (7) and the second continuous drain means (8) each consist of a drain conduit formed by an extension of the corresponding sub-circuit (3, 4) and are equipped with respective valve means (11, 12) for checking the passage of the fluid.

6. The dental unit according to claim 2 or 3, **characterised in that** the selection means (10) consist of shutoff means (15, 16) mounted on the first and second sub-circuits (3, 4) upstream of the respective branches (17, 18) supplying each of the items of medical equipment (2a, 2b).

7. The dental unit according to claim 2 or 3, including a microprocessor unit 19 to control the main and auxiliary functions of the dental unit (100), **characterised in that** the selection means (10) are connected to the microprocessor unit (19) so that the selection means (10) can be programmed to enable inflow of the disinfectant / sterilising liquid when one of the defined events occurs on the dental unit (100).

8. The dental unit according to claim 1 or 3, **characterised in that** the water circuit (1) includes an independent container (20) to hold the user fluid and to supply an endpiece (21) with the user fluid for a tumbler (22); the container (20) being equipped with third continuous drain means (23) designed to enable the fluid in the independent container (20) to be continuously renewed.

9. The dental unit according to claim 8, **characterised in that** the third continuous drain means (23) consist of a drain conduit (24) connected to the container (20) and are equipped with valve means (25) for checking the passage of the fluid.

10. A method for disinfecting / sterilising the water circuits (1) of dental units (100); each dental unit (100) comprising: a main water circuit (1) for supplying a user fluid to main and accessory medical instruments (2) on the dental unit (100); a first sub-circuit (3) and a second sub-circuit (4) for dividing the fluid supply between the main or accessory medical instruments (2a, 2b) mounted on a first tray (5) and those mounted on a second tray (6); and at least one first independent branch (9) connected to the water circuit (1) and supplying the water circuit (1) with at least one disinfectant / sterilising liquid, the method comprising at least the steps of: introducing a disinfectant / sterilising liquid in the water supply circuit (1) for a predetermined length of time and flushing the disinfectant / sterilising liquid out of the supply circuit (1) at least through the sub-circuit (3), the method being **characterised in that** it comprises at least the steps of: introducing a disinfectant / sterilising liquid in the second sub-circuit (4) for a predetermined length of time and flushing the disinfectant / sterilising liquid out of the sub-circuit (4).

11. The method according to claim 10, **characterised in that** the step of introducing the disinfectant /sterilising liquid in the second sub-circuit (4) is simultaneous with the step of introducing it in the first sub-circuit (3).

12. The method according to claim 10, **characterised in that** the step of introducing the disinfectant / sterilising liquid in the second sub-circuit (4) precedes the step of introducing it in the first sub-circuit (3).

13. The method according to claim 10, **characterised in that** the step of introducing the disinfectant /sterilising liquid in the second sub-circuit (4) follows the step of introducing it in the first sub-circuit (3).

14. The method according to claim 10, **characterised in that** the step of introducing the disinfectant /sterilising liquid is preceded at least by a step of activating the selection means (10) on the first and second sub-circuits (3, 4) so as to enable the liquid to be introduced in the sub-circuits (3, 4) in predetermined succession.

15. The method according to claim 10, **characterised in that** it comprises a further step of opening the selection means (10) acting on the first and second sub-circuits (3, 4) carried out simultaneously with the step of flushing out the disinfectant /sterilising liquid, so as to let the user fluid flow in.
